# NEW EUROPEAN PATENT SPECIFICATION

(11) **EP 0 550 214 B2**
(45) Date of publication and mention of the opposition decision: **12.12.2001**
(45) Mention of the grant of the patent: 01.10.1997
(21) Application number: 92311504.2
(22) Date of filing: 16.12.1992
(51) Int. Cl.: C08L 23/12, C08L 23/06

(54) **Semicrystalline polymer blend compositions with enhanced interspherulitic and interlamellar strength**
Mischungen aus teilkristallinen Polymeren mit hoher intersphärolitischer und interlamellairer Festigkeit
Mélanges de polymères semi-cristallins présentant une résistance intersphérulitique et interlamellaire élevée

(30) Priority: 09.10.1992 US 958972; 20.12.1991 US 811357
(43) Date of publication of application: 07.07.1993
(73) Proprietor: ExxonMobil Research and Engineering Company, Annandale, New Jersey 08801 (US)
(72) Inventor: Lustiger, Arnold, Edison, New Jersey 08817 (US)
(74) Representative: UEXKÜLL & STOLBERG

(56) References cited:
- DE-A- 1 420 559
- FR-A- 2 009 263
- GB-A- 2 241 244
- US-A- 3 888 949
- Macromolecules, 1989, vol. 22, pp. 3851-3866, J.W. Colette et al.

## Description

This invention relates to polymer compositions having reinforced spherulitic boundaries and improved interlamellar strength.

Polypropylene crystallizes in a spherulitic morphology with inherently weak spherulite boundaries subject to fracture upon impact. The spherulite boundaries, which are critical to strength, tend to be weak causing premature failure under most loading conditions.

Polypropylene blends using ethylene as a toughening agent have been described, see for example "Morphology and Properties of Blends of Polypropylene with Ethylene-Propylene Rubber," Jang et al., Polymer Engineering and Science, V. 24, No.8, Mid-June 1984 describing rubbers dispersed as small particles in the polypropylene matrix, "Polyesters to Polypeptide Synthesis, " Encyclopedia of Polymer Science and Engineering, V. 12 pp 443-444 stating that polypropylene blends exhibit improved toughness, "Rubber-Toughening in Polypropylene," Jang et al., Journal of Applied Polymer Science, V. 30, (1985), pp 2485-2504 observing that the rubber particles were randomly dispersed in the polypropylene matrix, were engulfed by the growing matrix, and did not reside preferentially at the spherulite boundaries, "Crystalline Morphology of Polypropylene and Rubber-Modified Polypropylene," Journal of Applied Polymer Science, V. 29, pp 4377-4393 (1984) showing that the rubber phase is not preferentially pushed to the spherulite boundaries and the distribution of the rubber particles is random in the polypropylene matrix. "Propylene/ethylene-co-propylene blends: influence of molecular structure of EPR and composition on phase structure of isothermally crystallized samples," D'Orazio et al., Journal of Materials Science V 26, pp 4033-4047 (1991) discusses amorphous EPR minor component segregation mainly in spherical shaped domains distributed in intra and interspherulitic regions. However, no interspherulitic boundary strengthening was observed. Indeed, because the copolymers discussed are amorphous, they are unable to crystallize and hence cannot provide reinforced spherulite boundaries and interlamellar links, as in the present invention.

Several U.S. patents are also directed to propylene ethylene polymer compositions see for example 4946898 and 4948841 to Kasahara et al., 4774292 to Thiersault et al., and 4395519 to Minami et al. The above patents do not disclose a semi-crystalline polymer blend where the copolymer of the blend is preferentially located at the spherulite boundaries as does the present invention.

This invention provides a semicrystalline polymer composition with reinforced spherulite boundaries and Interlamellar links, comprising a major amount of a semicrystalline polypropylene homopolymer and a minor amount of a semicrystalline propylene ethylene co-polymer and a process of making the same. The semicrystalline copolymer will be located at the spherulite boundaries. As used herein, a minor amount means 1 to 50 wt.% and a major amount means at least 50 wt.% up to 99.9 wt.%.

The semicrystalline copolymer has a lower degree of crystallinity and crystallization temperature than the semicrystalline homopolymer. The semicrystalline homopolymer and semicrystalline copolymer are mixed through melt or solution blending, and then processed under cooling conditions which allow the semicrystalline homopolymer to crystallize before the semicrystalline copolymer located at the spherulite boundaries. As the semicrystalline homopolymer crystallizes, the noncrystallizable segments of the semicrystalline copolymer are rejected from the lamellae within and between spherulites. Probably, the crystallization of the crystallizable segments in adjacent lamellae and/or spherulites allows for strengthening of the interlamellar and interspherulitic regions by adding to tie molecule concentration. These regions would otherwise have a tendency to be weak under many loading conditions.

The semicrystalline copolymer chains are comprised of crystallizable and noncrystallizable segments. As used herein noncrystallizable segments means that such segments will not crystallize under the same conditions that the homopolymer crystallizes under. Crystallizable segments means that such segments will crystallize under the same conditions as the homopolymer.

All polymers referred to herein are semicrystalline polymers. Semicrystalline polymers have both a crystalline phase and an amorphous phase, the former residing in a plate-like lamellar structure. During solidification, the lamellae become radially oriented into structures known as spherulites. During crystallization, the lamellae and spherulites have a tendency to reject low molecular weight polymer as well as various impurities into interlamellar and interspherulitic regions. This segregation often results in poor mechanical performance since the interlamellar and interspherulitic regions are local areas of mechanical weakness.

By this invention a homopolymer is blended with a copolymer . Such copolymer must be miscible in the melt with the homopolymer at the concentrations used. The copolymer is comprised of the homopolymer and a comonomer. The copolymer is .1 to 50 wt. %, preferably 5 to 30 wt.%, more preferably 10 wt.%, of the polymer blend formed by this invention.

The amount of comonomer in the copolymer can range from 1 to 70 wt.% depending on the comonomer used. The amount of comonomer must be such that the copolymer is miscible in the melt with the homopolymer and the copolymer must be capable of cocrystallizing in the blend during crystallization. When ethylene is the comonomer, it may be present in an amount up to 8 wt.%. Ethylene amounts greater than 8 wt.% would not provide the necessary melt miscibility. Such melt miscibilities are easily determinable by those skilled in the art (see for example Lohse, "The Melt Compatibility of Blends of Polypropylene and Ethylene-Propylene Copolymers," Polymer Engineering and Science, November 1986, Vol. 26, No. 21, pp 1500-1509). As used herein comonomer means one of the monomers comprising the copolymer.

The copolymers used in the present invention are olefin based copolymers, meaning that the polymer chain backbone is an olefin. The copolymers may be random copolymers or block copolymers. A block copolymer is one in which the monomer units occur in relatively long alternate sequences on a chain.

The homopolymer is polypropylene, more preferably isotactic polypropylene. The comonomer of the copolymer is ethylene. Hence, the copolymers utilized with polypropylene as the homopolymer are propylene ethylene. Likely, the nonstereoregular sequence of the comonomer of the copolymer disrupts crystallinity and hence lowers the crystallization temperature of the copolymer.

After the homopolymer has been blended with the copolymer, the blend is melted and then allowed to cool at a rate dictated by the crystallization temperature and crystallization kinetics of the specific blend. This is easily determined by one skilled in the art. The homopolymer must have completely formed spherulites before the copolymer at the spherulite boundaries begins to crystallize. This means that primary crystallization must have been completed in the homopolymer prior to onset of crystallization of the copolymer at the spherulite boundaries. Primary crystallization occurs during spherulite formation of the semicrystalline homopolymer. The desired cooling rate will be a function of the difference in crystallization temperature and crystallization rates between the homopolymer and copolymer. The greater the difference the faster the cooling rate can be. The difference in crystallization temperature of the homopolymer and copolymer is 20 to 100°C, preferably 50 to 100°C with the crystallization temperature of the copolymer being lower.

During spherulite formation, likely the homopolymer will crystallize first, but allow the crystallizable segments of the copolymer to cocrystallize with it. However, the noncrystallizable segments of the copolymer will be rejected from between adjacent lamellae within or between spherulites. The crystallizable segments of the copolymer chains which are in the body of the spherulites attach themselves to adjacent lamellae, enhancing the link between these lamellae by adding to interlamellar tie molecule concentration. The crystallizable segments of the copolymer chain which are at the spherulite boundaries attach themselves to the lamellae across adjacent boundaries enhancing the concentration of interspherulitic tie molecules. In this way, the molecular link between spherulites and lamellae becomes enhanced, resulting in improved failure resistance and mechanical performance.

The following example is illustrative and not limiting in any way.

### EXAMPLE 1

900 grams of 35 melt flow rate polypropylene homopolymer was combined with 100 grams of 30.1 melt flow rate ethylene propylene random copolymer containing 5.1 percent ethylene units. The two polymers were then dry-blended by mixing in a plastic bag. The mixture was then extruded at a temperature of 180°C and pelletized.

10 pellets were then placed between two aluminum sheets which were then placed in a compression mold and melted at 200°C for one minute. 10900 kg (24000 pounds) of pressure were applied to a 30.5cm (12") by 30.5cm (12") mold containing the melt. The material was then cooled at a rate of 5°C per minute and held at 130°C for 30 minutes under pressure. The material was then removed from the mold and the aluminum sheets peeled off.

### EXAMPLE 2 (materials not according to the invention)

6.3 grams of 200 melt flow rate polypropylene homopolymer was combined with 0.7 grams of a crystalline-amorphous block polypropylene prepared in accordance with J. Am. Chem. Soc. 1990,112,2030-2031, "rac-[Ethylidene(l-η⁵-tetramethylcyclopentadienyl) (1-η⁵-indenyl)]dichlorotitanium and Its Homopolymerization of Propylene to Crystalline-Amorphous Block Thermoplastic Elastomers, Mallin, Rausch, Lin, Dong, and Chien, only polymerized at 30°C. The two polymers were dry blended by mixing in a paper cup. The mixture was then extruded at a temperature of 190°C and pelletized.

5 grams were then placed within a tensile mold 0.5mm (0.020 inches) thick, 2.5mm (0.1 inches) wide, and 25mm (1 inch) long between two aluminum sheets in a compression mold and melted at 200°C for 2 minutes under slight pressure. 34.5kPa (5,000 Ibs) of pressure were applied to the 12" x 12" platens containing the melt. The material was then cooled at a rate of approximately 100°C per minute by transferring the mold and aluminum between water cooled platens. An impact specimen was prepared by taking some of the tensile specimens and remolding them into an IZOD type impact specimen using the same molding conditions as above. Tensile properties of this blend show an elongation of 300%, versus 5.7% for the 200 melt flow rate base polypropylene alone. Impact energy was 0.54 joules (0.4 foot-pounds) for the blend versus 0.054 joules (0.04 foot-pounds) for the base polypropylene.

## Claims

1. A polymer composition comprising
a major amount (50 wt% up to 99.9 wt%) of a semicrystalline polypropylene homopolymer and
a minor amount (0.1 to 50 wt%) of a semicrystalline propylene ethylene copolymer
wherein the homopolymer and the copolymer are melt miscible and the copolymer has a lower degree of crystallinity and a lower crystallization temperature than the homopolymer,
the crystalline portions of the copolymer being co-crystallized onto adjacent lamellae of the homopolymer, and
the non-crystallline portions of the copolymer being located at the spherulite boundaries and between the lamellae of the homopolymer.

2. A process of forming a polymer composition having increased spherulite boundary and interlamellar strength comprising the steps of:
a) mixing a semicrystalline polypropylene homopolymer with a semicrystalline propylene ethylene copolymer wherein the copolymer has a lower crystallization temperature than the homopolymer to form a polymer mixture
b) melting the polymer mixture wherein the copolymer and the homopolymer are melt miscible,
c) crystallizing the melted polymer mixture by cooling at a rate sufficient to allow the homopolymer to form spherulites and thereafter continuing to cool to allow the copolymer or the crystalline portions of the homopolymer to co-crystallize onto adjacent lamellae of the homopolymer, and the non-crystalline portions of the copolymer to locate at the sperulite boundaries and between the lamellae of the homopolymer.

## Patentansprüche

1. Polymerzusammensetzung, die
eine größere Menge (50 Gew.-% bis 99,9 Gew.-%) eines semikristallinen Polypropylenhomopolymers und
eine geringere Menge (0,1 bis 50 Gew.-%) eines semikristallinen Propylen/Ethylen-Copolymers,
wobei das Homopolymer und das Copolymer in der Schmelze mischbar sind und das Copolymer einen niedrigeren Grad an Kristallinität und eine niedrigere Kristallisationstemperatur aufweist als das Homopolymer,
die kristallinen Teile des Copolymers auf angrenzende Lamellen des Homopolymers co-kristallisiert sind und
die nicht-kristallinen Teile des Copolymers an den Sphärolitgrenzen und zwischen den Lamellen des Homopolymers angeordnet sind.

2. Verfahren zur Bildung einer Polymerzusammensetzung mit erhöhter Sphärolitgrenz- und interlamellarer Festigkeit, bei dem:
(a) ein semikristallines Polypropylenhomopolymer mit einem semikristallinen Propylen/Ethylen-Copolymer gemischt wird, wobei das Copolymer eine niedrigere Kristallisationstemperatur aufweist als das Homopolymer, um eine Polymermischung zu bilden,
(b) die Polymermischung geschmolzen wird, wobei das Copolymer und das Homopolymer in der Schmelze mischbar sind,
(c) die geschmolzene Polymermischung durch Abkühlen mit einer Rate kristallisiert wird, die ausreicht, um zu erlauben, daß das Copolymer oder die kristallinen Teile des Homopolymers auf angrenzende Lamellen des Homopolymers co-kristallisieren und sich die nicht-kristallinen Teile des Copolymers an den Sphärolitgrenzen und zwischen den Lamellen des Homopolymers anordnen.

## Revendications

1. Composition polymère comprenant
une quantité majeure (50 % en poids à 99,9 % en poids) d'un homopolymère de polypropylène semicristallin, et
une quantité mineure (0,1 % en poids à 50 % en poids) d'un copolymère de propylène-éthylène semicristallin,
dans laquelle l'homopolymère et le copolymère sont miscibles à l'état fondu et le copolymère a un degré de cristallinité et une température de cristallisation inférieurs à ceux de l'homopolymère, la différence de température de cristallisation étant de 20°C à 100°C,
les parties cristallines du copolymère étant co-cristallisées sur des strates voisines de l'homopolymère, et
les parties non cristallines du copolymère étant situées aux limites des sphérulites et entre les strates de l'homopolymère.

2. Procédé de formation d'une composition polymère ayant une limite de sphérulite et une résistance interstrates accrues, comprenant les étapes suivantes :
(a) on mélange un homopolymère de polypropylène semicristallin avec un copolymère de propylène-éthylène semicristallin dans lequel le copolymère a une température de cristallisation inférieure à celle de l'homopolymère, la différence de température de cristallisation étant de 20°C à 100°C, pour former un mélange de polymères de 50 % en poids à 99,9 % en poids d'homopolymère de polypropylène et de 0,1 % en poids à 50 % en poids de copolymère de propylène-éthylène,
(b) on fait fondre le mélange de polymères dans lequel le copolymère et l'homopolymère sont miscibles à l'état fondu,
(c) on cristallise le mélange de polymères fondus par refroidissement à une cadence suffisante pour permettre à l'homopolymère de former des sphérulites et ensuite, on continue à refroidir pour permettre au copolymère ou aux parties cristallines de l'homopolymère de se co-cristalliser sur des strates voisines de l'homopolymère, et aux parties non cristallines du copolymère de se situer aux limites des sphérulites et entre les strates de l'homopolymère.
